# EUROPEAN PATENT APPLICATION

(11) **EP 4 657 270 A1**
(43) Date of publication of application: **03.12.2025**
(21) Application number: 25178151.4
(22) Date of filing: 22.05.2025
(51) Int. Cl.: G06F 15/163, G06F 11/16, G06F 11/30, G06F 15/78

(54) **SPLIT LOCK ARCHITECTURE OF MULTI-CORE PROCESSOR**

(30) Priority: 30.05.2024 GB 202407667
(71) Applicant: Imagination Technologies Limited, Kings Langley, Hertfordshire WD4 8LZ (GB)
(72) Inventor: Ramalingaiah Munnan, Ravindranath, Kings Langley, WD4 8LZ (GB)

(57) **Abstract**

A multi-core processor comprising a first core, a second core and a comparator. Each core is capable of running both safety-critical and non-safety-critical applications and each core comprises a memory associated to it. The first core is configured to, on initiating a safety-critical application, send a request to the second core to enter into a lock mode to execute the safety-critical application in parallel with the first core. The comparator is configured to receive inputs from the first core and the second core, wherein the comparator compares the input from the first core and the second core. The second core is configured to perform, on receiving the request, the steps of: driving the comparator into a transition state; stopping execution of a first application running on the second core; saving data from of the second core to the memory associated with the second core; and sending an acknowledgment back to the first core in response to the request. The first core, in response to receiving the acknowledgement signal, is further configured to enable the execution of the safety-critical application by both cores in lock mode by configuring the memory and the comparator.

## Description

### CROSS-REFERENCE TO RELATED APPLICATION

This application claims priority from UK patent application GB2407667.1 filed on 30 May 2024, which is herein incorporated by reference in its entirety.

### TECHNICAL FIELD

The application relates to split lock architecture of multi-core processors. The application is particularly related to dynamically switching a core from split mode to lock mode operation and vice versa.

### BACKGROUND

Safety-critical systems are typically those systems whose failure would cause a significant increase in the risk to the safety of people or the environment. Processing systems often form an integral part of safety-critical systems, either as dedicated hardware or as processors for running safety-critical application/software. For example, fly-by-wire systems for aircraft, driver assistance systems, railway signalling systems and control systems for medical devices would typically all be safety-critical applications running on processing devices and therefore need high level of safety compliance. The safety-critical applications may have mixed degree or various levels of safety requirements. Therefore, having an SoC which can be configured to the meet the different levels of safety requirements depending on the use cases and applications provides greater flexibility to trade-off between performance and safety.

Modern processing systems are expected to be able to handle a variety of tasks, and often comprise multiple processor units/cores, such as a central processing unit (CPU) or a multi-core CPU and/or a graphics processing unit (GPU). Each of the processors may be suited to handle different processing tasks/ applications. Some of the tasks or applications would be normal applications which can be otherwise called non-safety critical applications whereas some of the applications may be safety-critical applications for which a fail-safe operation needs to be ensured when a fault occurs, to pose minimum risk to the user. There can be separate processing units/cores dedicated to run only safety-critical applications and some for running non-safety critical applications.

For various complex applications such as automobile applications or space applications, the performance can be increased when the same core in a processing system is capable of running various programs for both safety critical and non-safety critical applications. The same core in hardware, in order to run both safety critical and non-safety critical applications, has to be switched to different modes of working. Typically, the core is configured during the boot time to work in lock mode or split mode. In lock mode, a core is configured to execute a safety-critical application by running as part of a set of cores in the same state performing the same instructions so that the results can be compared to identify any potential faults. Further, in split mode, the core is configured to execute a non-safety critical application independently. The only known method of switching between a split mode and lock mode is to stop all processing of the core, reset and reboot the core to operate in a different mode. This is a lengthy process of reinitializing the core (CPUs/GPUs) over several hundreds of clock cycles which drastically increases processor down time and power and decreases overall performance and reliability.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A multi-core processor comprising a first core, a second core and a comparator. Each core is capable of running both safety-critical and non-safety-critical applications and each core comprises a memory associated to it. The first core is configured to, on initiating a safety-critical application, send a request to the second core to enter into a lock mode to execute the safety-critical application in parallel with the first core. The comparator is configured to receive inputs from the first core and the second core, wherein the comparator compares the input from the first core and the second core. The second core is configured to perform, on receiving the request, the steps of: driving the comparator into a transition state; stopping execution of a first application running on the second core; saving data from of the second core to the memory associated with the second core; and sending an acknowledgment back to the first core in response to the request. The first core, in response to receiving the acknowledgement signal, is further configured to enable the execution of the safety-critical application by both cores in lock mode by configuring the memory and the comparator.

According to a first aspect, there is provided a multi-core processor, the processor comprising: a first core and a second core, wherein each core is capable of running both safety-critical and non-safety-critical applications and each core comprises a memory associated to it, and wherein the first core is configured to, on initiating a safety-critical application, send a request to the second core to enter into a lock mode to execute the safety-critical application in parallel with the first core; a comparator configured to receive inputs from the first core and the second core, wherein the comparator compares the input from the first core and the second core; wherein the second core is configured to perform, on receiving the request, the steps of: driving the comparator into a transition state; stopping execution of a first application running on the second core; saving data from of the second core to the memory associated with the second core; and sending an acknowledgment back to the first core in response to the request; and wherein the first core, in response to receiving the acknowledgement signal, is further configured to enable the execution of the safety-critical application by both cores in lock mode by configuring the memory and the comparator.

Optionally, the first core is configured to, on receiving the acknowledgement signal, set a signal to instigate the configuration of memory and comparator.

Optionally, the first core is configured to, on receiving the acknowledgement signal from the second core, configure the comparator by enabling the comparator to receive the input from the first and second core.

Optionally, the processor further comprises a set of memory mux configured to channel inputs from the memory to the corresponding cores.

Optionally, the first core is configured to, on receiving the acknowledgement signal from the second core, configure the memory and the set of memory mux to channel input from the memory associated with first core to both the first core and the second core.

Optionally, the first core and second core are configured to run the safety-critical application using the input received from the memory associated with the first core in lock mode.

Optionally, the second core is configured, on completing the execution of safety-critical application, to return to a split mode and resume the execution of the first application using the data saved in the memory.

Optionally, the request is one of a flag bit or a flush request.

Optionally, the second core is configured to save data comprising context information including architectural states of key registers and states of the second core, and any residual data.

Optionally, the second core drives the comparator to the transition state by stopping/switching OFF the execution of the comparator to stop the comparator receiving any inputs from the second core.

Optionally, the second core drives the comparator to the transition state by masking the output from the comparator.

Optionally, the second core is configured to keep the comparator in the transition state at least until all data is flushed from the second core.

Optionally, the second core is configured to determine a pipeline depth by identify number of clock cycles required to flush all the data.

Optionally, the second core provides an idle signal when all data is flushed.

Optionally, the second core is configured to apply a soft reset to pipeline of second core thus resetting the pipeline so that all data is flushed.

Optionally, the comparator is configured to, on execution, compare the input from the first core and the second core to detect any fault with the cores when running the safety-critical application.

According to a second aspect, there is provided a computer implemented method of dynamically switching a second core of a multi-core processor to operate in a lock mode with a first core, wherein each core is capable of running both safety-critical and non-safety-critical applications and each core comprises a memory associated to it, the method comprises: sending, on initiating a safety-critical application, a request from the first core to the second core to enter into the lock mode to execute the safety-critical application in parallel with the first core; performing, on receiving the request, the steps of: driving a comparator configured to receive inputs from the first core and the second core to a transition state; stopping execution of a first application running on the second core; saving data from the second core to the memory associated with the second core; and sending an acknowledgment back to the first core; and in response to receiving the acknowledgement signal, enabling the first core and the second core to execute the safety-critical application in lock mode by configuring the memory and comparator.

Optionally, the method includes on receiving the acknowledgement signal, setting a signal to instigate the configuration of memory and comparator.

Optionally, configuring the comparator comprises enabling the comparator to receive inputs from the first core and second core and generate output by comparing the inputs.

Optionally, configuring the memory comprises configuring a set of memory mux to channel inputs from the memory associated with first core to both the first core and the second core.

Optionally, driving the comparator to the transition state is performed by stopping/switching OFF the execution of the comparator to stop the comparator receiving any inputs from the second core.

Optionally, driving the comparator to the transition state is performed by masking the output from the comparator.

Optionally, the method comprises keeping the comparator in the transition state at least until all data is flushed from the second core and stored into the memory associated with the second core.

Optionally, the multi-core processor is embodied in hardware on an integrated circuit.

According to a third aspect, there is provided a multi-core processor, the processor comprising: a first core and at least one second core, wherein each core is capable of running both safety-critical and non-safety-critical applications and each core comprises a memory associated to it, and wherein the first core is configured to, on initiating a safety-critical application, send a request to the at least one second core to enter into a lock mode to execute the safety-critical application in parallel with the first core; a comparator configured to receive inputs from the first core and the at least one second core, wherein the comparator compares the input from the first core and the at least one second core; and wherein each at least one second core is configured to perform, on receiving the request, the steps of: driving the comparator into a transition state; stopping execution of a respective first application running on that second core; saving data from of that second core to the memory associated with the second core; and sending an acknowledgment back to the first core in response to the request; and wherein the first core, in response to receiving the acknowledgement signal from each at least one second core, is further configured to enable the execution of the safety-critical application by the first core and the at least one second core in lock mode by configuring the memory and the comparator to operate in lock mode.

The multi-core processor may be embodied in hardware on an integrated circuit. There may be provided a method of manufacturing, at an integrated circuit manufacturing system, a multi-core processor. There may be provided an integrated circuit definition dataset that, when processed in an integrated circuit manufacturing system, configures the system to manufacture a multi-core processor. There may be provided a non-transitory computer readable storage medium having stored thereon a computer readable description of a multi-core processor that, when processed in an integrated circuit manufacturing system, causes the integrated circuit manufacturing system to manufacture an integrated circuit embodying a multi-core processor.

There may be provided an integrated circuit manufacturing system comprising: a non-transitory computer readable storage medium having stored thereon a computer readable description of the multi-core processor; a layout processing system configured to process the computer readable description so as to generate a circuit layout description of an integrated circuit embodying the multi-core processor; and an integrated circuit generation system configured to manufacture the multi-core processor according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 shows a multi-core computing system according to the present invention;
FIG. 2 illustrates an architecture for dynamically configuring a pair of cores in a system 100 to switch from a split mode to a lock mode and vice versa;
FIG.3 shows an embodiment of the architecture of FIG. 2;
FIG.4 shows another embodiment of the architecture of FIG. 2;
FIG. 5 shows a first implementation of the architecture of FIG. 2;
FIG. 6 shows a second implementation of the architecture of FIG. 2;
FIG. 7A is a flowchart illustrating the steps performed by first core to engage with the second core to execute in lock mode;
FIG. 7B is a flowchart illustrating the steps performed by second core while engaging with the first core to execute in lock mode;
FIG. 8 shows a computer system in which the architecture of FIG. 2 is implemented; and
FIG. 9 shows an integrated circuit manufacturing system for generating an integrated circuit embodying a multi-core processor.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

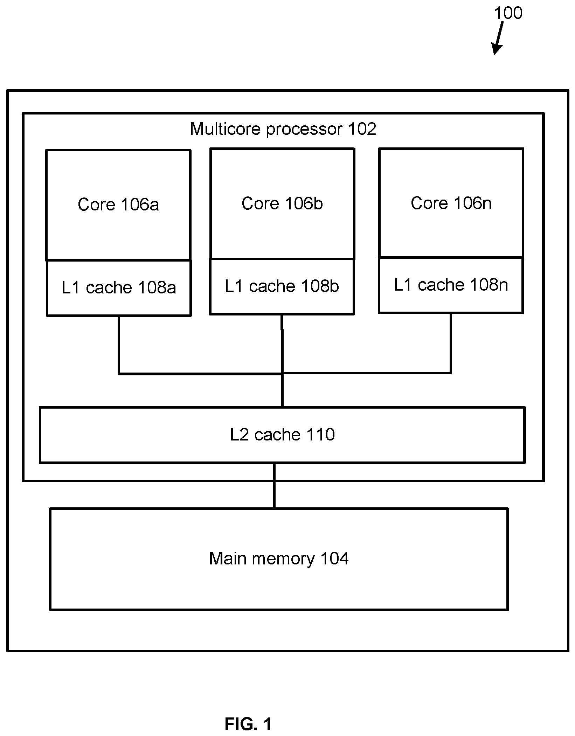

FIG. 1 shows a multi-core computing system. The system 100 comprises a multicore processor 102 and a main memory 104. The multicore processor 102 comprises a plurality of cores 106a, 106b... 106n and a plurality of primary memories 108a, 108b... 108n. The plurality of cores could be CPU or GPU or any other processing units. Each core is an independent processing unit capable of reading and executing program instructions. The plurality of cores can interact with each other and hence benefit from the advantage of parallel processing and resource sharing. Each core has a primary memory (typically an L1 cache) for storing instructions and data for that core. The L1 cache operates at the same speed as the core. The multicore processor 102 further may comprise secondary memory or an L2 cache 110. L2 cache 110 is shared among the plurality of cores to store instructions and data. By reducing the time it takes to fetch data from main memory 104, the L1 and L2 cache contributes to overall system performance.

As explained earlier, each core may be capable of running both safety-critical and non-safety critical applications. However, some of the cores may be configured to work in split mode and some of them in lock mode while booting the system. It is possible that in one example configuration at boot time, half of the cores are configured to work in split mode and the other half to work in lock mode and in another embodiment, more than half of the number of cores may be configured to operate in split mode and the remaining cores may be configured to operate in lock mode or vice versa. In yet another embodiment of the system, all the cores may be configured to operate in either one of the split or lock mode depending on the applications that needs to be run. Each core configured in split mode is capable of running a different application such as various non-safety critical applications independently in parallel whereas a pair of cores configured in lock mode run the same safety-critical application to ensure safety.

In other words, the system may use a core configured in split mode while performing non-safety critical applications where the operation of the core need not be checked constantly to enable a fail-safe operation, which enables efficient utilization of the system resources by performing different applications independently. Moreover, the system may enable fail-safe operation of a safety-critical application by running the same application on more than one core configured in lock mode/ a lockstep mode where the two cores (having the same architecture and same state) perform exactly the same operations. This enables comparing the results of the cores, which should ideally be the same, to identify if there are any faults in the working of one of the cores. There can be various random errors that can be introduced into hardware, e.g. by transient events (e.g. due to ionizing radiation, voltage spikes, or electromagnetic pulses). In binary systems transient events can cause random bit-flipping in memories and along the data paths of a processor. In lock mode, if an error occurs on one processor but not on another performing the same task, causing a difference in the processing results from the processors, the comparison of the processing results will identify that difference, which will act as a signal that a fault has occurred. Once a fault or system failure is identified while running the cores in lock mode, the fault is further flagged or communicated to a supervisory system in the SoC/software to take preventive measures such as resetting the core or rebooting or restoring the state back to previously known good state.

Having some processors to run in lock mode allows us to identify faults and correct them. However, this could lead to decrease in processor performance and reliability when the applications are mostly safety-critical application or if they are mostly non-safety-critical application. Each core is configured to operate in one of the split mode or lock mode while booting the system. Suppose there are 16 cores in the system and half of the cores are configured to operate in split mode and the other half are configured to operate in lock mode. Consider that the applications in queue or which are scheduled to be run by the system are mostly non-safety safety-critical applications. In such a case, only half of the cores (i.e. 8 cores) in the system which are configured in lock mode would be able to run the safety-critical applications. Thus 8 cores would be able to run as 4 pairs and execute 4 safety-critical applications which the remaining 8 cores configured to operate in split mode may remain idle if there are no non-safety critical applications scheduled to run by the system. This would drastically reduce the system performance and reliability.

Now to solve this problem, the cores configured to operate in split mode (all 8 cores in the example) can be reconfigured to operate in lock mode to run the safety-critical applications efficiently. The reconfiguration or switching between a split mode and lock mode can be performed only by stopping all processing of the cores, resetting and rebooting the cores to operate in a different mode. This is a lengthy process of reinitializing the cores over several clock cycles which increases the system down time and this reducing the overall system performance.

The inventors therefore devised an architecture and method of reconfiguring a core to a different mode or, in other words, switching between the split mode and lock mode dynamically without the need for rebooting or re-initializing the entire system. This drastically reduces processor down time, improves overall performance and provides higher flexibility to improve overall power, performance and reliability. Various embodiments of the system are explained in detail below.

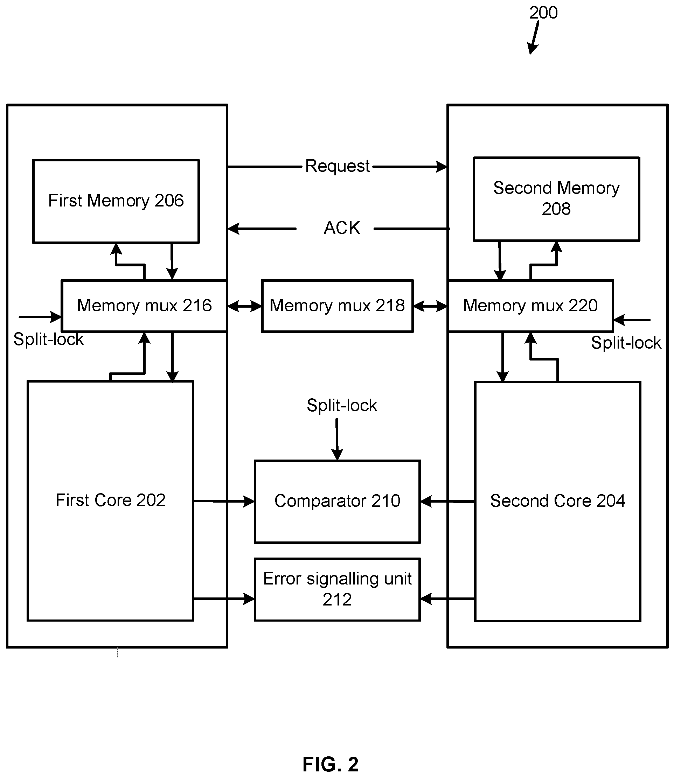

FIG. 2 illustrates a system/multi-core architecture 200 for dynamically configuring a pair of cores in a system to switch from a split mode to a lock mode and vice versa. The architecture 200 comprises a plurality of cores either configured in split mode or lock mode during initial booting. For simplicity a pair of cores entering into lock mode and their functioning is shown in FIG. 2, but there can be any number of cores. It is possible that the first core can enter into lock mode with a further core, such that all three cores (triplet cores) operate in lock mode together. Similarly, the first core can enter into a lock mode with a number of further cores such that the set of cores operate in lock mode to execute a safety critical application. The architecture 200 comprises a first core 202 and a second core 204. The first core 202 and the second core 204 may be any type of processing units, such as CPU processing units or GPU processing units. Each core has at least one software application running on it. Each core has a memory associated with it. The first core 202 comprises a first memory 206 associated with it and the second core comprises a second memory 208 associated with it. Each memory could be a memory within the core it is associated with or could be a separate module outside the core it is associated with. The architecture 200 further comprises a comparator 210 and error signalling module 212. The comparator 210 is configured to receive input signals from the first core 202 and the second core 204. The comparator 210 further compares the signals from the first core and second core to identify if there is an error in of the processing results of the cores. The error signalling module 212 is configured to interpret the output from the comparator and generate valuable information required for correcting those errors. The first core and the second core are both capable of running safety-critical applications and non-safety critical applications. In one example, a single OS on each core is capable of configuring the states of the cores to execute both safety critical and non-safety critical applications. Safety-critical application would be run in lock mode and non- safety critical application would be run in split mode. In another example, each core may comprise two or more operating systems, each running/executing either a safety-critical application or non-safety critical application. For example, one OS would be non-safe OS running non-safety critical application and other OS would be a safe OS running safety-critical application. In yet another example, such as embedded systems, the cores may be capable of executing both safety critical and non-safety critical applications without an OS.

Each core in the system can be configured to work in any of the split or lock mode during initialization. In one example, a number of cores in the system would be initialised to operate in lock mode and the remaining cores would be initialized to operate in split mode. In another example all cores in the system may be initialized to operate in either split mode or in lock mode. Consider that the first core is configured to operate in lock mode and the second core is configured to operate in split mode during initialisation or while booting the system. The second core in split mode may be running a first application (any non-safety critical application) independently. Typically, while performing non-safety critical application, the operation of the second core need not be checked constantly. However, the output from the second core may always be provided to the comparator even while running a non-safety critical application. Now consider that a safety-critical application is scheduled to be run by the first core 202. The first core would require another core as a redundant core or a slave core to operate with the first core in lock mode to run the instructions at the same time in parallel to enable a fail-safe execution of the safety-critical application. The first core could enter into a lock mode with another core already configured in lock mode if it is available. If another core configured to operate in lock mode is not available, then the first core may dynamically configure another core which is configured to operate in split mode during initialization to switch to lock mode and then act as a redundant core or slave core to assist the first core to run the safety-critical application in lock mode. In other words, the first core instigates or causes the second core to change its configuration from split mode to lock mode to operate the safety-critical application in lock mode with the first core.

The first core 202 is configured to, on initiating the execution of a safety-critical application, send a request to the second core 204 to enter into a lock mode with the first core to execute the safety-critical application in parallel with the first core 202. In a first embodiment the request could be a flag bit. The operating system of the first core may set a register bit high to indicate that the first core is about to run a safety-critical application next. This triggers the first core to raise a flag which communicates the second core to enter into a lock mode with the first core. In a second embodiment, the request from the first core could be a flush request sent to the second core, to flush the second core's pipeline.

Since the second core is configured to operate in split mode during initialization and may be already executing another non-safety-critical application, the first core instigates the second to perform a plurality of steps to engage with the first core to execute the safety-critical application in lock mode. The second core 204 is configured to stop the execution of the first application running on the second core 204. The second core 204 is further configured to save data from the second core to the memory 208 associated with the second core. The data may comprise context information including architectural states of key registers and states of the second core while executing the first application. The data may further comprise residual data and dirty data in the second core generated after stopping the execution of the first application. The residual data, which may also be called intermediate data, is data required to restore the context information. Dirty data refers to data that contains erroneous information which can be inaccurate, incomplete such as duplicate data, incorrect data, etc. The second core 204 may ensure the context data and the residual data are saved in the memory 208 associated with the second core 204.

Also, on receiving the request from the first core 202, the second core 204 is configured to drive the comparator 210 to a transition state. The comparator is driven to the transition state for the period between executing the previous application and executing the safety-critical application, in order to stop the comparator from further receiving any output from the second core 204 related to first application. This is done to ensure that the comparator does not generate any fault signal by comparing the wrong outputs. In other words, it is to ensure that the comparator does not generate any fault signal by comparing the output obtained while executing the first application from the second core and an output obtained while executing the safety-critical application by the first core. Thus, the comparator is kept in a non-operable transition state until the second core enters into the lock mode. This can be done in a number of ways, as set out below.

In a first approach, the second core 204 is configured to, on receiving the request from the first core, drive the comparator to a transition state by stopping or switching OFF the execution of the comparator to stop the comparator receiving any inputs from the second core. As explained above this is done to eliminate any false comparisons during lock mode with any data from the execution of first application in split mode. The second core is also configured to stop the executing/processing the first application and to flush all data including dirty data from the second core and to save the context data and residual data in the memory of the second core. The comparator is configured to remain switched OFF at least until all the data including the dirty data is flushed from the second core.

In one example of this approach, in order to flush all data including dirty data the pipeline depth is determined by identifying the number of clock cycles required to flush the dirty data out of the second core. The pipeline depth can be identified, in one example, from a programmable count value. The programable count vale can be programmed or initialized during boot up and at any point represent the pipeline depth i.e. indicates the number of clock cycles required to flush out data in the core Once the pipeline depth is known, the number of clock cycles required to flush the data including dirty data is identified.

In another example of this approach, a signal from the second core may indicate if all the data is flushed. The second core may indicate its states using specific signals such as idle, busy or pending. Therefore, when the execution of the first application is performed, the second core provides a busy signal. When execution is stopped and the data such as context information and residual data is being flushed, it provides a pending signal to indicate its state. When all data including dirty data is flushed and the core is idle, it provides an idle signal to indicate its state. In this case the transition state involves the comparator being configured to be switched OFF at least until the idle signal is received from the second processor.

In yet another example of this approach, in order to flush the data including dirty data a soft reset is applied to the second core's pipeline thus resetting the pipeline so that dirty data can be flushed out as soon as possible. The soft reset enables the reset of only a specific part of the logic to remove dirty data from the pipeline registers. This may be done by selectively activating a special reset capability of the flip flops stages behind signals/interfaces that go out of the CPU to the comparator. The soft reset can be applied either from hardware state machines or software.

In a second approach the transition state involves masking the comparator until all data including dirty data is flushed to the memory from the second core. The comparator is masked by masking the output until the dirty data is flushed so that no results are obtained from the comparator based on the dirty data when the safety-critical application is run. As explained above with respect to the first approach, in one example the second core calculates the pipeline depth to identify the number of clock cycles required to flush the dirty data. The comparator is masked at least for the number of clock cycles required to flush the dirty data from the second core. In other words, the output of the comparator is unmasked only after the calculated number of clock cycles required to flush the dirty data from the second processor. In another example, the comparator is masked and unmasked based on the indicator signal from the second core. Thus, the comparator is masked at least until the second core provides an idle signal to indicate its state that all data including dirty data is flushed and the second core is ready to engage with the first core. In yet another example the comparator is masked until a soft reset is applied and all the data is flushed into the second memory.

The second core after performing all the steps and saving the data in the memory 208 sends an acknowledgement signal (ACK) back to the first core 202 in response to the request send by the first core. The ACK signal indicates that the second core has flushed all the data from the core and is ready to engage with the first core in lock mode. Meanwhile, the first core on initiating the safety-critical application, will flush all the data from any application executed previously and initialize its states to execute the safety-critical application. The first core may send an initial state signal back to indicate the initialization of states to execute the safety-critical application. On receiving the ACK signal, the first core instigates the second core to change the configuration from split mode to lock mode by ending the transition state of the comparator and changing the memory configuration. The first core may set a split_lock signal to instigate the second core to change the configuration. In an example where the first core enter into lock mode with more than one slave core (such as second core and third core), then the first core waits for all the ACK signals from all those slave cores before instigating the slaves cores to change the configuration.

In lock mode, both the first and second core run the safety-critical application together t. To enable lock mode, a split_lock signal (flag bit) is provided to change the configuration of the memory and comparator thereby bringing the first and second CPU into the same state. The split_lock signal may be provided by the first core instigating other cores to run a safety critical application. The configuration of memory is changed such that the memory 206 associated with the first core is shared by both the first core and the second core. This enables the memory 206 to provide the same instructions as input to the first core and the second core to execute the safety-critical application simultaneously in parallel. This can be done using a memory mux or a set of memory muxes to mux the input from the memory 206 to first core and second core. For example, FIG. 2 illustrates three muxes 216, 218 and 220. The first mux 216 is connected to the first core 202 and its memory 206 and to the second mux 218. The second mux 218 connects the first mux and the third mux 220. The third mux 220 is connected to the second mux 218 and the second core 204 and its memory 208. When the lock mode is enabled the split_lock signal changes the configuration of the memory mux such that the instructions from the memory 206 is mux-ed by the first mux 216 to the second mux 218 as well as the first core 202. The second mux 218 output the instructions to the third mux 220 and the third mux outputs the instructions to the second core 204. Thus, the same instructions from the same memory are provided to both the first and second core enabling both the first and second core to operate in lock mode.

Further the comparator is configured by enabling it to receive inputs from the first and second core and compare the results/data obtained when executing the instructions of the safety-critical application thus identifying any fault in the system. The comparator 210 is an error detector that compares the signals from the first core and second core to identify if there is an error in of the processing results of the cores. The error signalling module 212 is configured to interpret the output from the comparator and generate information based on the interpretation. The information generated is provided to a supervisor system to further interpret it and take necessary action to correct the error in the processor. For example, the error signalling module 212 interprets certain errors from the comparator as correctable errors or non-fatal errors and generates a signal to indicate that the error is correctable. In another example, the error signalling module 212 interprets certain errors from the comparator as non-correctable errors or fatal errors and generates a signal to indicate that the error is non-correctable. The information is further flagged or communicated to a supervisory system in the SoC to take appropriate measures.

Once the execution of the safety-critical application is completed, the system switches back the cores to the modes they were configured in earlier. In this example, the second core was initially configured in split mode and will be switched back to the split mode to complete the first application run by the second core. This is done by the first core raising another flag or sending a second flush request to the second core indicating that the execution of the safety-critical application is complete. On receiving the flag, the second core stores the data including the context information of the safety-critical application which was being run into the memory of the second core. Further a restore instruction/operation is performed to restore the first application (non-safety critical application) which was previously run before the running the safety-critical application in lock mode.

Thus, the system switches dynamically from split mode to lock mode and lock mode and vice versa without any rebooting or re-initializing of the core, thereby reducing the latency and improving the overall performance by making the switching between split mode and lock mode faster.

The trigger to switch from split mode to lock mode can be provided by the first core in various methods. In one embodiment, the first core may be executing a program having both non-safety critical instructions and safety-critical instructions. In an example, the core could be a GPU rendering a dashboard display having non-safety critical icons and safety-critical icons where both non-safety critical instructions and safety critical instructions are in a single program. The dashboard display may include an instrument cluster comprising dials such as a tachometer, a speedometer and a plurality of warning lights (or tell-tale indicators) including a battery warning indication, ABS warning light, oil temperature gauge, a non-critical warning icon (e.g. indicating a fault with the air conditioning system), and a critical warning icon (e.g. indicating a serious engine problem) etc.

In the below example, a program running on core 1 and core 2 comprises both non-safety critical instructions/code and safety-critical instructions/code. Suppose both cores are executing non-safety critical instructions/code for various non-safety critical applications independently. When the first core (Core 1) initiates a safety-critical application, it sends a request (Flush_Req) and waits for an ACK signal from the second core (Core 2). The second core on receiving the Flush_Req having a value 1 or set to high, will flush all the data and save the data including context information (save_context) to the memory 206. Once all the data is saved the second core sends back the ACK signal (Flush_ack) back to the first core. On receiving the ACK signal (Flush_ack) the first core, initialise its states and enter into lock mode with the second core by setting a Split_Lock signal as low. Both core on entering the lock mode execute the same safety-critical instructions/ safety critical software code.

Further after completing the execution of the safety critical software code, the first core sets the Split_Lock signal to high releasing the second core from lock mode. The second core on receiving the Split_Lock signal as high execute an instruction to restore the context information stored in memory associated with the second core and resume the execution of instructions/code for non-safety-critical application.

| Core 1 | Core 2 |
|---|---|
| { | { |
| Non-Safe software code ... | Non-Safe software code ... |
| .............................................. | .............................................. |
| .............................................. | .............................................. |
| .............................................. | .............................................. |
| } | } |
| | If (Flush_req == 1) |
| Flush_Req; // assert flush req and wait for | Save_Context; |
| Flush_Ack | Send(flush_ack); //Signal A |
| Wait(flush_ack); //wait for flush_Ack | |
| // Barrier A | |
| Split_Lock = 0; //Enter into lock mode (Safe) | { |
| **{** | **Safety critical software code ...** |
| **Safety critical software code ...** | **..............................................** |
| **..............................................** | **..............................................** |
| **..............................................** | **..............................................** |
| **..............................................** | |
| } | If(Split_lock = 1) // Enter Non-Safe mode |
| Split_Lock = 1; //Enter into Split mode (Non- | Restore_Context; |
| Safe) | Resume Non-Safe SW code |
| Flush_Req ; // assert flush req and wait for | |
| Flush_Ack | |
| Wait(flush_ack); //wait for flush_Ack | |
| { | |
| Non-Safe software code ... | |
| .............................................. | |
| .............................................. | |
| .............................................. | |
| } | |

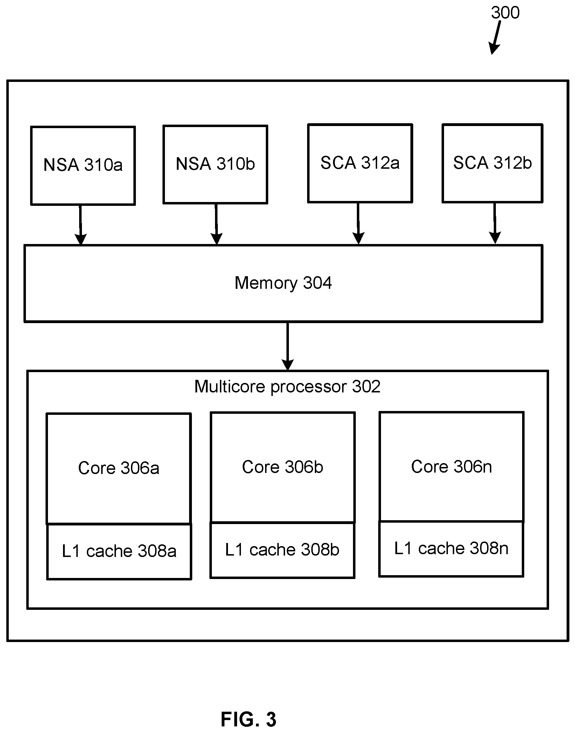

In FIG. 3, a multi-core processor 302 comprises a plurality of cores 306a, 306b...306n and a memory 304. Each core may comprise a single operating system configuring the state of the system to run both safety-critical applications and non-safety critical applications, and may have a corresponding memory 308a, 308b... 308n associated with it. A number of non-safety critical applications (NSA) 310a and 310b and safety-critical applications (SCA) 312a and 312b may be scheduled to be run by the cores. The operating system configures the system to run safety-critical application in lock mode and non-safety critical application in split mode dynamically.

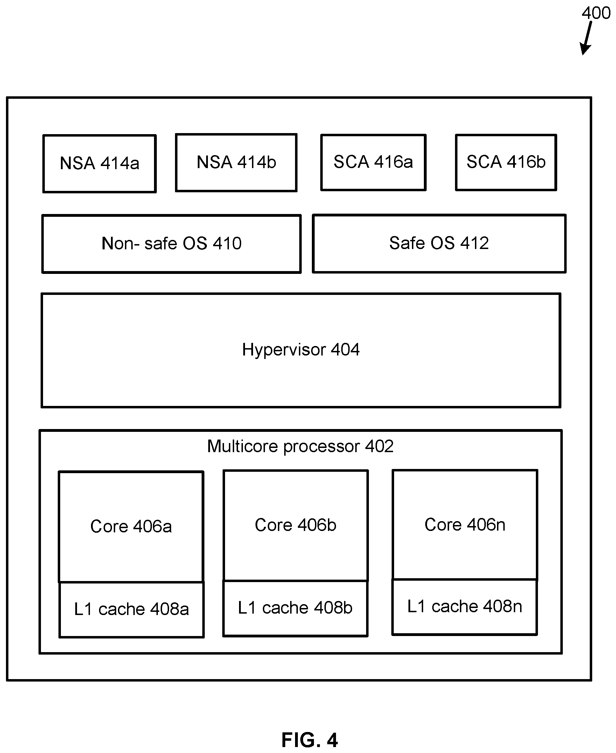

In another embodiment as shown in FIG. 4, a multi-core processor 402 comprises a plurality of cores 406a, 406b...406n. The cores may be running on a hypervisor mode where each core may comprise a plurality of operating system each running either safety-critical application or non- safety critical application. For example, one OS 410 would be non-safe OS running non-safety critical applications (NSA) 414a, 414b etc and other OS 412 would be a safe OS running safety critical application (SCA) 416a, 416b etc. Thus, the hypervisor 404 switches the safe OS 412 to non-safe OS 410 or vice versa dynamically without rebooting.

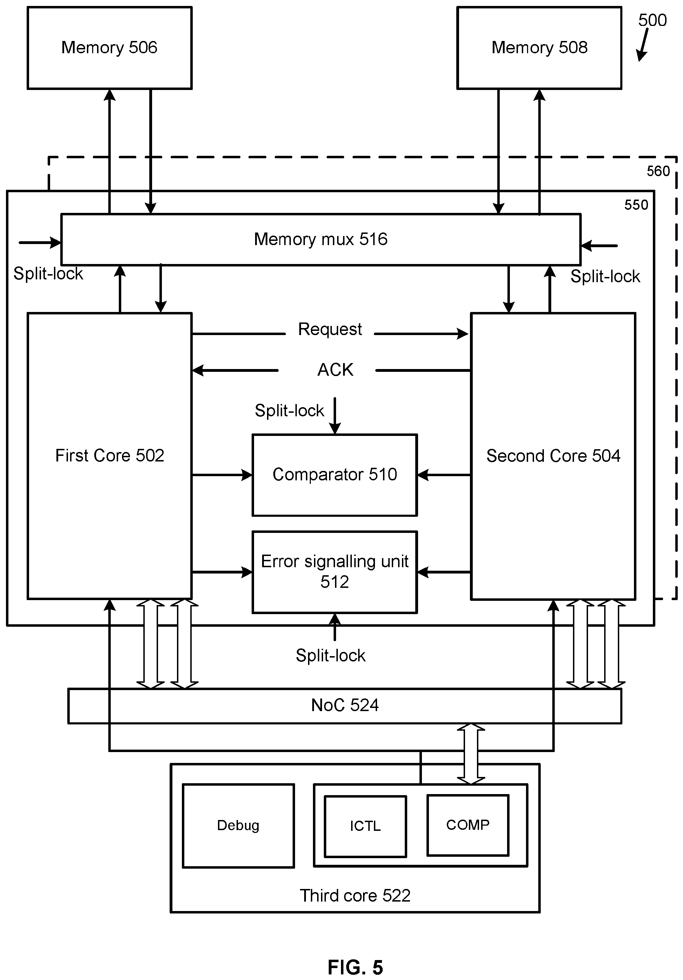

FIG. 5 shows a first implementation of the system 200 explained in FIG. 2. In this architecture 500, two cores (502 and 504) along with other components form a slice or an instance 550 or 560. A slice 550 comprises a complete set of components such as dedicated memory (506 and 508), memory interfaces, memory mux (516), comparators (510), error signalling blocks (512) etc. The slice can be instantiated as many number of times as needed. In SoC design, the slice can be treated as a macro block and can be stamped as many number of times as required. Each core in a slice can be either used in a lock mode to achieve higher safety or a split-mode to gain more performance but with less safety as explained with FIG.2. In split mode, both cores are configured to execute any non-safety critical application independently. When used in lock mode, a first core 502 may initiate executing a safety-critical application and engage with the second core in the same slice which would act as a redundant core to execute the same safety-critical application in parallel with the first core. The working of the architecture 500 is exactly same as explained in FIG. 2. Instead of three memory mux a single mux 516 would mux the input instructions from the memory to (506 and 508) to each core. In lock mode, a split_lock signal is provided with the memory mux 516 provide same instruction from memory 506 associated with the first core to both the first core and the second core. Also, the split lock signal is applied to the comparator to configure the comparator to receive the inputs from the first core and the second core. The comparator compares the inputs to detect if there is any error while running the safety-critical application.

Once a fault or system fault or system failure is detected, while running the cores in lock mode, the error signalling unit identifies the fault and generates the information regarding the fault. The information is further flagged or communicated to a supervisory system (third core) 522 in the SoC to take appropriate measures such as resetting the core or rebooting. The supervisory system could be a high-level system or may be a system at the same level as the other cores. In one example the supervisory system may be a safety island core or yet another core designated to handle critical events/interrupts/triggers. In one example, as shown in FIG.5, interrupt signal may be provided to both cores when an error is detected and communicated to third core 522. A Network on Chip (NoC) 524 enables communication between the first core, second core and the third core on the SoC. The NoC 524 is a communication medium that connects multiple cores or functional units that connects them. The NoC is an optional element. Any other medium for communication could be used instead of NoC.

The architecture 500 makes it easier to meet the timings between core and the common components like comparator, error signalling blocks, memory mux because the entire slice will be synthesized as one partition. Also, it is easier to add/remove signals in the common components without affect partition level pins. However, the complexity of architecture 500 is higher due to the presence of two cores in one slice. Further the synthesis/ power down runtimes would be longer for architecture 500.

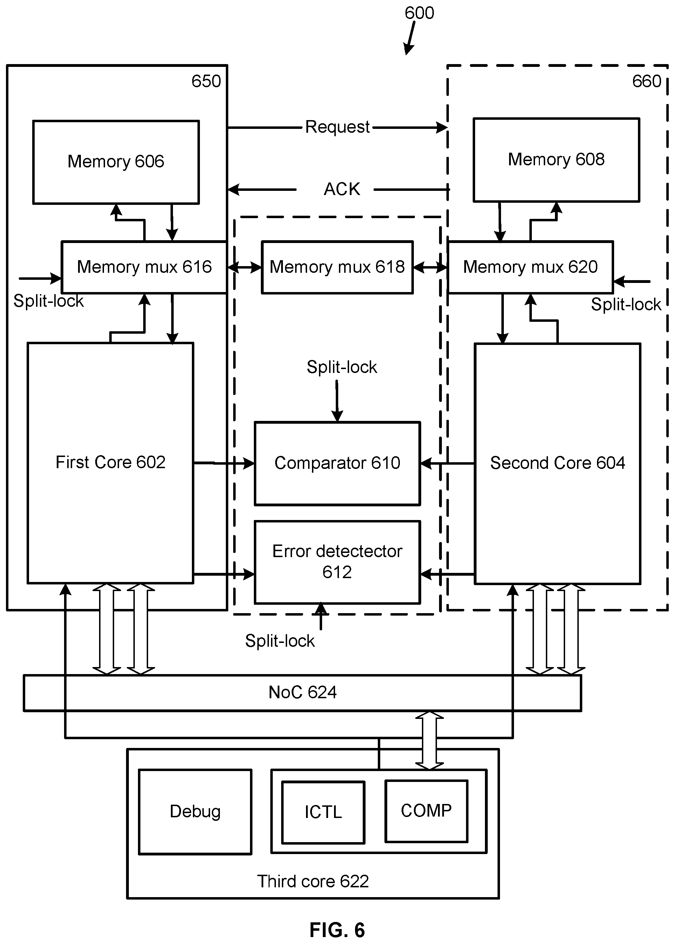

FIG. 6 shows a second implementation of the system 200 explained in FIG. 2. In this architecture 600 each slice has one core along with other essential components. A first slice 650 comprises a first core 602 and associated memory 606 and a memory mux 616. A second slice 660 comprises a second core 604 and associated memory 608 and a memory mux 620. The common components like comparator 610, error signalling unit 612 and a part of the memory mux 618 goes into separate partition 670. In this architecture, to operate in lock mode, a minimum of 2 slices is required along with a partition 670 comprising common safety component blocks. The working of the architecture is exactly same as that described with respect to FIG. 2.

In split mode, both slices 650 and 660 are configured to execute any non-safety critical application independently. When used in lock mode, the first core 602 on the first slice 650 may initiate executing a safety-critical application and engage with the second core 604 in the second slice 660 which would act as a redundant core to execute the same safety critical application in parallel with the first core. The working of the architecture 600 is exactly same as what explained in FIG. 2. A set of memory muxes, i.e. memory mux 616, 618 and 620 would be configured to mux the input instructions from the memory to (606/608) to both cores (602/604). In split mode the memory mux 616 provides instructions from memory 606 to first core 602 and memory mux 620 provides instructions from memory 608 to the second core 604. In lock mode, a split_lock signal is provided to the set of memory muxes to provide the same instruction from memory 606 associated with the first core to both the first core and the second core. Also, the split_lock signal is applied to the comparator to configure the comparator to receive the inputs from the first core and the second core. The comparator compares the inputs to identify if there is any error while running the safety-critical application. Once a fault is identified, the fault is flagged or communicated to a higher-level system (third core) 522 in the SoC to take appropriate measures such as resetting the core or rebooting. A Network on Chip (NoC) 524 enables communication between the first core, second core and the third core on the SoC.

The complexity of a slice in architecture 600 is lesser compared to architecture 500. The different partitions can be synthesized and closed for timing in parallel thereby reducing turn-around time. Also, the slice 660 containing the redundant core and its essential elements can be stamped as a mirror image of slice 650 in the physical design without the need to resynthesize the slice 660. Further it is easier to create power domains in this architecture 600. However certain drawbacks of the architecture 600 include increase in floorplan complexity due to more partitions/blocks that need to be placed strategically to avoid timing complications, and signals crossing partitions.

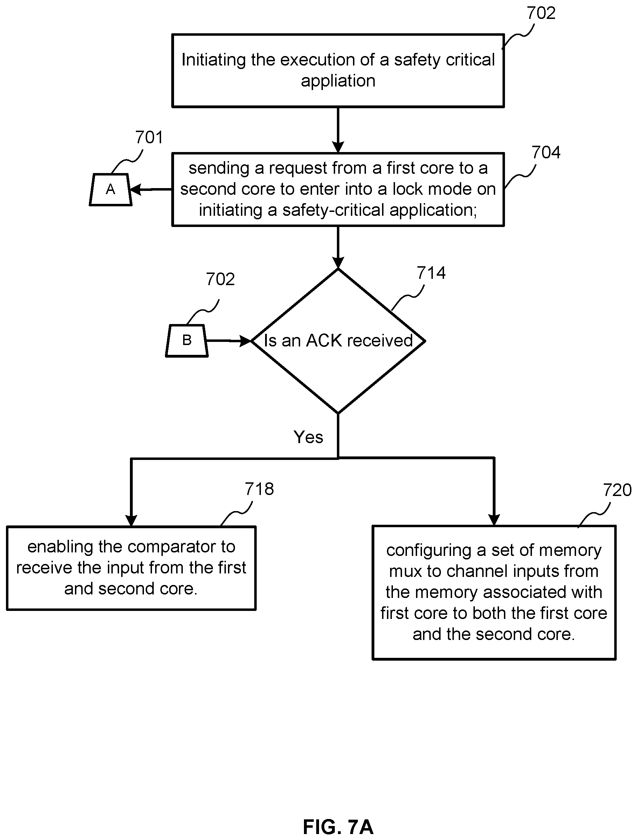

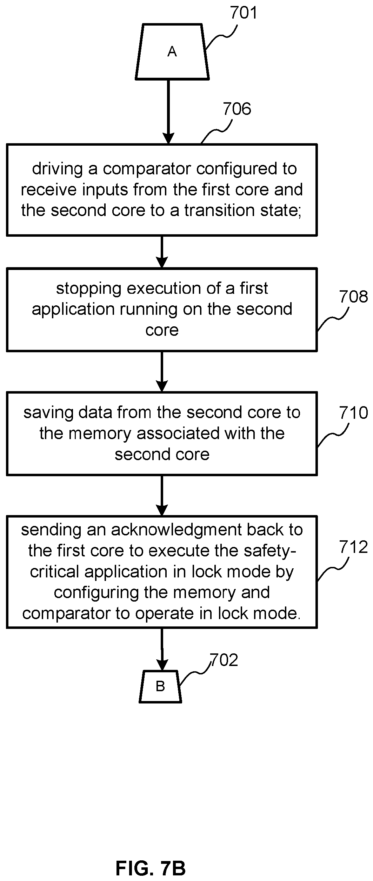

FIG. 7A and FIG. 7B illustrate the steps performed by first core and second core to engage with each other in lock mode to execute the safety critical application. Both first core and second core are capable of running both safety-critical and non-safety-critical applications and each core comprises a memory associated to it storing the data and instructions.

The method comprises, in step 702, a first core initiating the states to execute a safety critical application. On initiating the safety critical application, the first core at step 704 sends a request 701 to the second core to enter into a lock mode to execute the safety-critical application parallelly. In other words, the first core requests the second core to act as a redundant core and execute the same instructions executed by the first core in parallel to the first core thereby instigating the second core to change its configuration. Once the request is sent, the first core further waits for an ACK signal from the second core.

On receiving the request A, 701, the second core as shown in FIG. 7B performs the steps 706, 708 and 710. In step 706, the second core drives the comparator into a transition state. This can be done by any of the different approaches explained above, including switching OFF the comparator to stop receiving inputs from the first core and the second core or by masking the output of the comparator. Further the second core in step 708 stops the execution of the first application already running on the second core and in step 710, saves the data from the second core to the memory associated with the second core. The data from the second core may include the contextual information of the first application executed by the second core and may also include any residual data that remain in the pipeline after stopping the execution of the first application. The second core keeps the comparator in the transition state at least until all the data including the dirty data is flushed from the second core and stored in the memory associated with the second memory.

Once the steps 706, 708 and 710 are performed, the second core then at step 712 sends an acknowledgment back to the first core to engage with the first core and execute the safety-critical application in lock mode by configuring the memory and comparator to operate in lock mode.

The first core after sending the request in step 704 waits for receiving an ACK signal back from the second core. At step 714, in FIG.7A, the first core checks if an ACK signal is received. Meanwhile, the first core may send an initial state signal from to the second core indicating that the first core is in an idle state after saving any data from previous applications that was run on the first core to the memory associated with it and that it has initialized the sates to run the safety-critical application.

On receiving the ACK signal, then method includes, at step 718, configuring the comparator to receive any input from the first core and the second core and compare the inputs to identify any faults. This is done, in one embodiment where the comparator was switched OFF in the transition state, by switching ON the comparator back to operation. In another embodiment where the output of the comparator was masked in the transition state, the comparator is configured to operate by unmasking the output to allow identification of any subsequent fault in the system.

Also, after receiving the ACK signal, then method includes, at step 720, configuring the memory by configuring memory mux to provide to channel input from the memory associated with the first core to both first core and the second core. The input provided includes set of instructions for executing the safety-critical application. Thus, the first and second core execute the same set of instructions in parallel where the first core acts as a main core and the second core acts as a redundant core and both cores provide the outputs to the comparator. The comparator on receiving the inputs from the first core and the second core compares the signals to identify if there is any fault while executing the safety-critical application. Thus, the method enables dynamic switching of cores from split mode to lock mode without requiring rebooting the entire system or processor.

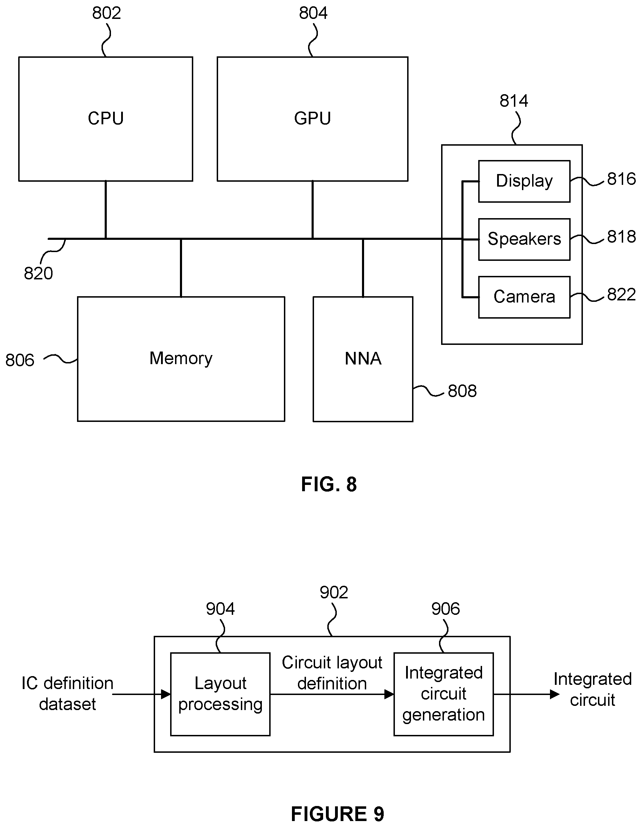

FIG.8 shows a computer system in which processing systems described herein may be implemented. The computer system comprises a CPU 802, a GPU 804, a memory 806, a neural network accelerator (NNA) 808 and other devices 814, such as a display 816, speakers 818 and a camera 822. The computer system may comprise two or more CPUs. The system may also further comprise two or more GPUs or NNA within the system. The mode of operation of the CPUs, GPUs or NNA may be dynamically switched from a split mode to a lock mode and vice versa as explained with reference to FIGs 2-6, The components of the computer system can communicate with each other via a communications bus 820. A store 812 is implemented as part of the memory 806.

The system/multi-core processor of Figures 2-6 are shown as comprising a number of functional blocks. This is schematic only and is not intended to define a strict division between different logic elements of such entities. Each functional block may be provided in any suitable manner. It is to be understood that intermediate values described herein as being formed by a system need not be physically generated by the multi-core processor at any point and may merely represent logical values which conveniently describe the processing performed by the multi-core processor between its input and output.

The multi-core processor described herein may be embodied in hardware on an integrated circuit. The multi-core processor described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a system configured to perform any of the methods described herein, or to manufacture a multi-core processor comprising any apparatus described herein. An integrated circuit definition dataset may be, for example, an integrated circuit description.

Therefore, there may be provided a method of manufacturing, at an integrated circuit manufacturing system, a multi-core processor as described herein. Furthermore, there may be provided an integrated circuit definition dataset that, when processed in an integrated circuit manufacturing system, causes the method of manufacturing a multi-core processor to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a will now be described with respect to Figure 9.

Figure 9 shows an example of an integrated circuit (IC) manufacturing system 902 which is configured to manufacture a multi-core processor as described in any of the examples herein. In particular, the IC manufacturing system 902 comprises a layout processing system 904 and an integrated circuit generation system 906. The IC manufacturing system 902 is configured to receive an IC definition dataset (e.g. defining a multi-core processor as described in any of the examples herein), process the IC definition dataset, and generate an IC according to the IC definition dataset (e.g. which embodies a multi-core processor as described in any of the examples herein). The processing of the IC definition dataset configures the IC manufacturing system 902 to manufacture an integrated circuit embodying a multi-core processor as described in any of the examples herein.

The layout processing system 904 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 904 has determined the circuit layout it may output a circuit layout definition to the IC generation system 906. A circuit layout definition may be, for example, a circuit layout description.

The IC generation system 906 generates an IC according to the circuit layout definition, as is known in the art. For example, the IC generation system 906 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 906 may be in the form of computer-readable code which the IC generation system 906 can use to form a suitable mask for use in generating an IC.

The different processes performed by the IC manufacturing system 902 may be implemented all in one location, e.g. by one party. Alternatively, the IC manufacturing system 902 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a multi-core processor without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 9 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 9, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A multi-core processor, the processor comprising:
a first core and a second core, wherein each core is capable of running both safety-critical and non-safety-critical applications and each core comprises a memory associated to it, and wherein the first core is configured to, on initiating a safety-critical application, send a request to the second core to enter into a lock mode to execute the safety-critical application in parallel with the first core;
a comparator configured to receive inputs from the first core and the second core, wherein the comparator compares the input from the first core and the second core;
wherein the second core is configured to perform, on receiving the request, the steps of:
driving the comparator into a transition state;
stopping execution of a first application running on the second core;
saving data from of the second core to the memory associated with the second core; and
sending an acknowledgment back to the first core in response to the request; and
wherein the first core, in response to receiving the acknowledgement signal, is further configured to enable the execution of the safety-critical application by both cores in lock mode by configuring the memory and the comparator.

2. The processor as claimed in claim 1, wherein the first core is configured to, on receiving the acknowledgement signal, set a signal to instigate the configuration of memory and comparator, and/or wherein the first core is configured to, on receiving the acknowledgement signal from the second core, configure the comparator by enabling the comparator to receive the input from the first and second core.

3. The processor as claimed in any preceding claims, wherein the processor further comprises a set of memory mux configured to channel inputs from the memory to the corresponding cores.

4. The processor as claimed in claim 3, wherein the first core is configured to, on receiving the acknowledgement signal from the second core, configure the memory and the set of memory mux to channel input from the memory associated with first core to both the first core and the second core, and wherein the first core and second core are configured to run the safety-critical application using the input received from the memory associated with the first core in lock mode.

5. The processor as claimed in any preceding claims, wherein the second core is configured, on completing the execution of safety-critical application, to return to a split mode and resume the execution of the first application using the data saved in the memory.

6. The processor as claimed in any preceding claims, wherein the second core is configured to save data comprising context information including architectural states of key registers and states of the second core, and any residual data

7. The processor as claimed in any preceding claims, wherein the second core drives the comparator to the transition state by stopping/switching OFF the execution of the comparator to stop the comparator receiving any inputs from the second core.

8. The processor as claimed in claims 1-6, wherein the second core drives the comparator to the transition state by masking the output from the comparator.

9. The processor as claimed in claim in 7 or 8, wherein the second core is configured to keep the comparator in the transition state at least until all data is flushed from the second core.

10. The processor as claimed in claim 9, wherein the second core is configured to determine a pipeline depth by identify number of clock cycles required to flush all the data.

11. The processor as claimed in claim 9, wherein the second core provides an idle signal when all data is flushed.

12. The processor as claimed in claim 9, wherein the second core is configured to apply a soft reset to pipeline of second core thus resetting the pipeline so that all data is flushed.

13. A computer implemented method of dynamically switching a second core of a multi-core processor to operate in a lock mode with a first core, wherein each core is capable of running both safety-critical and non-safety-critical applications and each core comprises a memory associated to it, the method comprises:
sending, on initiating a safety-critical application, a request from the first core to the second core to enter into the lock mode to execute the safety-critical application in parallel with the first core;
performing, on receiving the request, the steps of:
driving a comparator configured to receive inputs from the first core and the second core to a transition state;
stopping execution of a first application running on the second core;
saving data from the second core to the memory associated with the second core; and
sending an acknowledgment back to the first core; and
in response to receiving the acknowledgement signal, enabling the first core and the second core to execute the safety-critical application in lock mode by configuring the memory and comparator.

14. The method as claimed in claim 13, wherein driving the comparator to the transition state is performed by stopping/switching OFF the execution of the comparator to stop the comparator receiving any inputs from the second core.

15. The method as claimed in claims 13-14, wherein driving the comparator to the transition state is performed by masking the output from the comparator.
